# EUROPÄISCHE PATENTSCHRIFT

(11) **EP 3 569 053 B1**
(45) Veröffentlichungstag und Bekanntmachung des Hinweises auf die Patenterteilung: **04.08.2021**
(21) Anmeldenummer: 19174885.4
(22) Anmeldetag: 16.05.2019
(51) Int. Cl.: A01D 87/00, A01D 87/12

(54) **ARBEITSGERÄT MIT GREIFER UND VERFAHREN**
TOOL WITH GRIPPER AND METHOD
APPAREIL DE TRAVAIL AVEC PRÉHENSEUR ET PROCÉDÉ

(30) Priorität: 18.05.2018 DE 102018207881
(43) Veröffentlichungstag der Anmeldung: 20.11.2019
(73) Patentinhaber: Deere & Company, Moline, IL 61265 (US)
(72) Erfinder: Guiet, Lionel, 68163 Mannheim (DE)
(74) Vertreter: Stein, Stefan

(56) Entgegenhaltungen:
- EP-A1- 2 732 690
- WO-A2-00/40072
- US-A1- 2008 041 989
- US-A1- 2011 155 830

## Beschreibung

Die vorliegende Erfindung betrifft einen Greifer für ein Arbeitsgerät zur Handhabung von Ballen, ein Arbeitsgerät zur Handhabung von Ballen mit einem Aufnehmer und ein Verfahren zur Handhabung eines insbesondere rundzylindrischen Ballens mittels eines Arbeitsgeräts.

Bekannte Arbeitsgeräte zur Handhabung von Ballen finden Verwendung, um Ballen aufzunehmen, umzusetzen und/oder zu transportieren und werden an industriellen und/oder landwirtschaftlichen Fahrzeugen, wie beispielsweise an Traktoren, Ladern, Baggern etc. eingesetzt. Bei derartigen Ballen handelt es sich beispielsweise um industrielle Ballen, z.B. aus Materialien wie Textilien, Müll etc., insbesondere aber um landwirtschaftliche Ballen aus Heu, Stroh, Silage oder einem anderen Erntegut. Derartige Ballen werden beispielsweise auf dem Feld aufgenommen und direkt zu einer Lagerstelle gebracht oder auf ein entsprechendes Transportfahrzeug geladen. Um das Erntegut zu nutzen, beispielsweise, um es an einen Tierbestand zu verfüttern, um es als Einstreu zu verwenden oder um es in anderer Art und Weise zu verwerten, wird der Ballen gegebenenfalls erneut transportiert und/oder umgesetzt. Darüber hinaus muss der Ballen häufig von einem ihn umhüllenden oder umschließenden Hüllmaterial befreit werden, bei dem es sich beispielsweise um Netz, Folie oder auch Garn handeln kann. Dies kann ein zusätzliches Werkzeug und/oder einen weiteren Arbeitsschritt erforderlich machen, was aufwendig und zeitintensiv ist. Um dies zu vermeiden, wird teilweise versucht, Ballen mit Hilfe eines Ballenschneiders zu transportieren, was viel Fingerspitzengefühl erfordert und zu einem ungewollten Auftrennen des Ballens zur Unzeit führen kann. US 2008/0041989 A1 offenbart einen landwirtschaftlichen Ballenschneider mit einem Greifer, der an einem Querträger Messer und einen Zinken aufweist.

Die der Erfindung zugrunde liegende Aufgabe wird daher darin gesehen, einen Greifer, ein Arbeitsgerät und ein Verfahren vorzusehen, durch welche die vorgenannten Nachteile überwunden werden.

Die Aufgabe wird erfindungsgemäß durch die Lehre der Patentansprüche 1 und 8 gelöst. Weitere vorteilhafte Ausgestaltungen und Weiterbildungen der Erfindung gehen aus den Unteransprüchen hervor.

Mit der Erfindung kann ein Ballen zur Handhabung bzw. zum Transport durch den Greifer mittels wenigstens einer Zinke ergriffen werden, ohne dass die Schneideinrichtung auf den Ballen bzw. das Hüllmaterial einwirkt. Das Hüllmaterial wird nicht durchtrennt und der Ballen kann formstabil transportiert werden. Soll der Ballen nun von dem Hüllmaterial befreit werden, so kann der Greifer weiter an den Ballen herangeführt werden, wodurch die Zinke tiefer in den Ballen eingreift und die Schneideinrichtung in Kontakt mit dem Hüllmaterial bzw. dem Ballen gelangt und dieses durchtrennt. Es ist denkbar, ein Arbeitsgerät werksseitig oder auch nachträglich mit einem derartigen Greifer auszurüsten, es umzurüsten oder einen Greifer als ein Wechselwerkzeug vorzusehen.

Besonders vorteilhaft ist es, wenn sich die Schneideinrichtung zumindest im Wesentlichen über die Breite des Greifers erstreckt, so dass der Ballen bzw. ein Hüllmaterial über die gesamte Breite geschnitten bzw. getrennt werden kann. Es ist aber auch denkbar, dass sich die Schneideinrichtung nicht bis in Randbereiche des Greifers oder auch über diese hinaus erstreckt.

Besonders günstig ist es, wenn die Schneideinrichtung wenigsten ein, insbesondere in einer Spitze auslaufendes Messer aufweist, wobei vorzugsweise durch Schenkel des Messers Schneidkanten gebildet werden und/oder (die) Schenkel des Messers Schneidkanten aufweisen. Die Zinken können das Messer bzw. insbesondere die Spitze des Messers vorzugsweise substantiell überragen, so dass zuerst die Zinke an dem Ballen angreifen bzw. in diesen eingreifen kann und danach das Messer sukzessive in den Ballen und/oder das Hüllmaterial eindringt und dieses trennt. Es ist aber auch denkbar, dass die Schneideinrichtung eine Schneidkante aufweist, welche beispielsweise durchgehend, gerade, wellig oder in jeder anderen geeigneten Art und Weise ausgebildet ist.

Wenigstens zwei Zinken können den Greifer darin unterstützen, den Ballen zu ergreifen, zu stabilisieren oder zu fixieren. Zusätzlich können wenigstens zwei Messer vorgesehen sein, was sich günstig auf das Schneidverhalten der Schneideinrichtung auswirken kann, beispielsweise indem die Messer jeweils bereichsweise bzw. nach und nach in den Ballen bzw. das Hüllmaterial eingreifen bzw. dieses trennen.

Die Zinken und das Messer bzw. die Messer sind vorzugsweise zumindest im Wesentlichen alternierend und/oder korrespondierend, insbesondere fluchtend vorgesehen. Das Messer bzw. die/mehre Messer können jeweils zwischen zwei Zinken angeordnet sein bzw. eine Zinke kann mit dem Messer korrespondieren, insbesondere mit dem Messer bzw. der mit der sich durch die Spitze erstreckende Höhe des jeweiligen Messers fluchten. Ist eine Mehrzahl von Zinken/Messern vorgesehen, ist auch eine kombinierte Anordnung denkbar, so dass sowohl ein Messer/mehre Messer zwischen den Zinken angeordnet sind und ein weiteres Messer/weitere Messer mit einer Zinke/Zinken korrespondier(t)en bzw. fluchten.

Erfindungsgemäß sind auf Tragarmen des Greifers Zinken vorgesehen.

Das Arbeitsgerät ist insbesondere in der Art eines Anbaugeräts ausgebildet oder bildet einen Bestandteil eines derartigen Anbaugeräts. Es ist denkbar, das Arbeitsgerät werksseitig oder auch nachträglich mit einem Greifer auszurüsten, es umzurüsten oder einen Greifer als ein Wechselwerkzeug vorzusehen. Das Arbeitsgerät ist vorzugsweise geeignet zur Verwendung an einem industriellen oder insbesondere landwirtschaftlichen Fahrzeug. Bei dem Fahrzeug kann es sich beispielsweise einen Traktor, einen Lader, einen Teleskoplader oder ein ähnliches Arbeitsfahrzeug handeln.

Der Aufnehmer kann in der Art einer Schaufe ausgebildet sein.

Der Greifer ist mit Bezug auf den Aufnehmer verschwenkbar. Vorzugsweise ist ein Mittel zur selektiven Bewegung des Greifers mit Bezug auf den Aufnehmer vorgesehen. Bei dem Mittel kann es sich beispielsweise um eine manuelle Einrichtung handeln. Vorzugsweise ist aber ein Schwenkmotor, insbesondere in der Art eines, insbesondere doppeltwirkenden Hydraulikmotors mit einem Hydraulikzylinder und einem Kolben vorgesehen, der vorzugsweise von einer an dem Fahrzeug vorgesehen Druckquelle mit Hydraulikdruck versorgt wird. Der Schwenkmotor kann beispielsweise direkt angesteuert werden, insbesondere wird er aber über eine vorzugsweise an dem Fahrzeug vorgesehene Steuereinrichtung, beispielsweise in der Art eines Joysticks bedient. Auch eine automatisierte Steuer- und/oder Regelung ist denkbar.

Gemäß einem Verfahren zur Handhabung eines insbesondere rundzylindrischen Ballens mittels eines derartigen Arbeitsgeräts, kann der Greifer mit Bezug auf den Aufnehmer eine erste Stellung, in der die wenigstens eine Zinke in den Ballen ein- bzw. an diesen angreift und wenigstens eine zweite Stellung einnehmen, in der die Schneideinrichtung ein den Ballen umhüllendes Hüllmaterial zumindest bereichsweise durchtrennt.

Besonders günstig ist es, wenn der Greifer aus einer Ruhestellung in eine Aufnahmestellung, in der die Zinke an bzw. in den Ballen greift, und weiter in eine Schneidstellung gebracht bzw. verschwenkt werden kann, in der die Schneideinrichtung das Hüllmaterial durchtrennt, wobei der Greifer hierzu vorzugsweise über die Aufnahmestellung hinaus bewegt bzw. verschwenkt wird.

Anhand der Zeichnung, die ein Ausführungsbeispiel der Erfindung zeigt, werden nachfolgend die Erfindung sowie weitere Vorteile und vorteilhafte Weiterbildungen der Erfindung und Ausgestaltungen der Erfindung näher beschrieben und erläutert.

Es zeigt:
- Fig. 1: ein landwirtschaftliches Arbeitsfahrzeug mit einem Arbeitsgerät zur Handhabung von Ballen mit einem Aufnehmer und einem Greifer in einer Ruhestellung (durchgezogene Linien) und einer Aufnahmestellung (unterbrochene Linien) und
- Fig. 2: das Arbeitsgerät aus Figur 1 in einer vergrößerten Darstellung

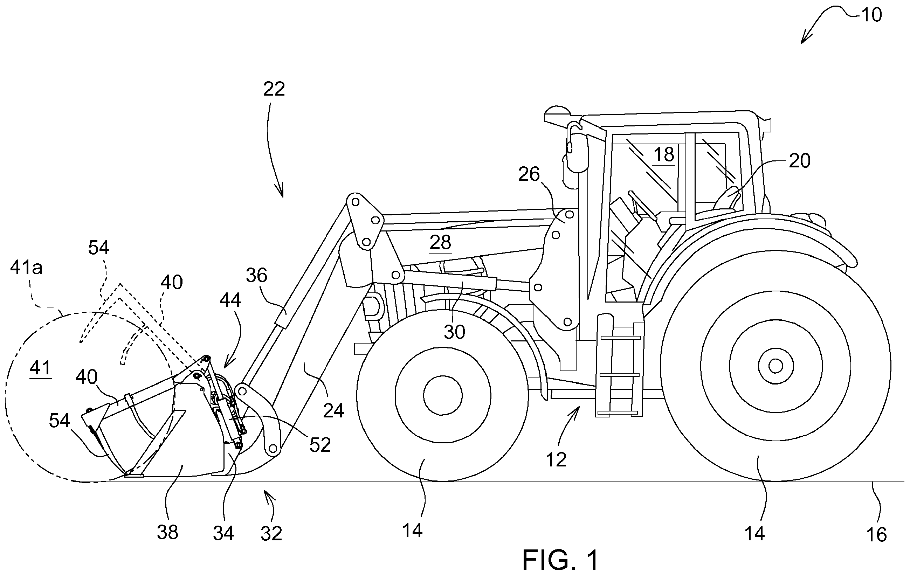

In der Figur 1 der Zeichnung wird ein landwirtschaftliches Arbeitsfahrzeug 10 in der Art eines Traktors schematisch dargestellt. Das Arbeitsfahrzeug 10 ist selbstfahrend ausgebildet und weist einen Rahmen 12 auf, welcher sich über Räder 14 auf dem Untergrund 16 abstützt. Darüber hinaus weist das Arbeitsfahrzeug 10 eine Kabine 18 mit einem Bedienersitz 20 für eine Bedienungsperson auf.

An dem Arbeitsfahrzeug ist eine Ladereinrichtung 22 in der Art eines Frontladers vorgesehen. Die Ladereinrichtung 22 umfasst eine beidseitig an die Seiten des Arbeitsfahrzeugs 10 anbaubare Laderschwinge 24, wobei die Laderschwinge 24 gemäß dem gezeigten Ausführungsbeispiel mittels einer mit dem Rahmen 12 verbundenen Anbaukonsole 26 an das Arbeitsfahrzeug 10 ankoppelbar ist.

Die Laderschwinge 24 umfasst beidseitig des Arbeitsfahrzeugs 10 parallel verlaufende Träger 28, die über eine nicht gezeigte Querstrebe miteinander verbunden sind, und ist über hydraulische Hubzylinder 30, die sich ebenfalls beidseitig des Arbeitsfahrzeugs 10 erstrecken, verschwenkbar. An einem freien Ende 32 der Laderschwinge 24 wird ein Arbeitsgerät 34 mittels eines hydraulischen Schwenkzylinder 36 schwenkbar aufgenommen.

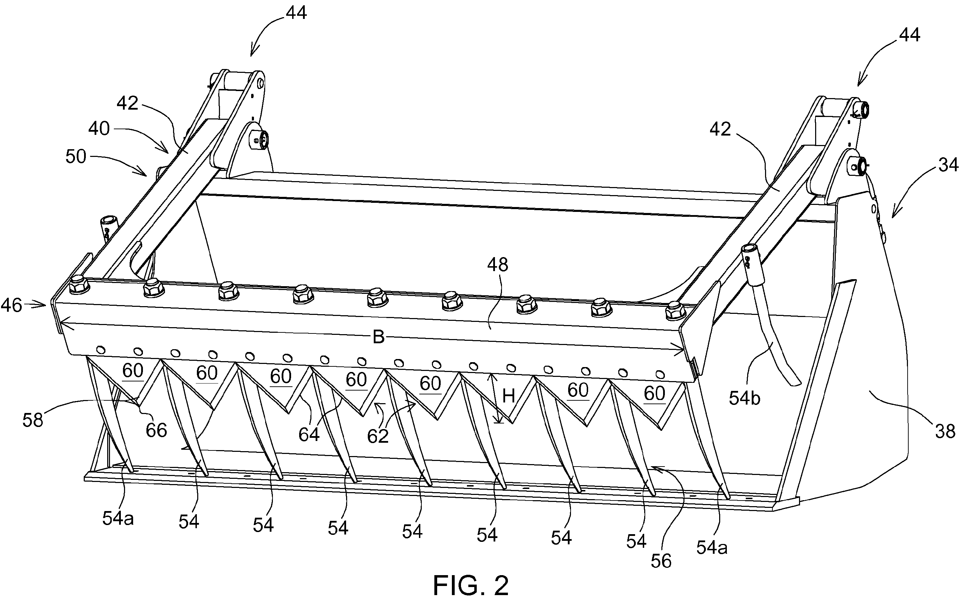

Im Folgenden wird nun auch auf die Figur 2 der Zeichnung Bezug genommen in der das Arbeitsgerät 34 alleine in einer perspektivischen Darstellung gezeigt wird. Das Arbeitsgerät 34 weist einen Aufnehmer 38 und einen Greifer 40 auf, wobei der Greifer 40 zumindest eine in Figur 1 in durchgezogenen Linien dargestellte Ruhestellung und eine in Figur 1 in unterbrochenen Linien gezeigte Transportstellung einnehmen kann, auf die im Folgenden noch genauer eingegangen werden wird. Der Aufnehmer 38 ist in der Art einer Schaufel ausgebildet, die geeignet ist einen Ballen 41, insbesondere einen rundzylindrischen, landwirtschaftlichen Pressballen bestehend aus Erntegut aufzunehmen, um diesen zu handhaben und/oder zu transportieren. Mittels des Aufnehmers 38 kann aber auch anderes Material, wie z.B. Schüttgut, Erntegut, Erde etc. oder auch Ballen anderer Form, wie beispielsweise Quaderballen, oder industrielle Ballen aufgenommen und/oder gehandhabt werden.

Der Greifer 40 dient der Sicherung des durch den Aufnehmer 38 aufgenommenen Materials und weist zwei Tragarme 42 auf, welche rechts- und linksseitig über jeweils ein Gelenk 44 schwenkbar mit dem Aufnehmer 38 verbunden sind. In einem dem Arbeitsfahrzeug 10 abgewandten Bereich 46 sind die Tragarme 38 über einen Querträger 48 derart verbunden, dass sie mit diesem einen Schwenkrahmen 50 bilden. Darüber hinaus ist ein nur andeutungsweise dargestellter Schwenkmotor 52 vorgesehen, der über ein in der Kabine 18 des Arbeitsfahrzeugs 10 vorgesehenes Steuermittel (nicht gezeigt), beispielsweise einen Joystick, angesteuert werden kann, so dass der Greifer 40 bzw. der Schwenkrahmen 50 bewegt bzw. verschwenkt werden kann. Der Schwenkmotor 52 kann beispielsweise als ein einen Hydraulikzylinder und einen - kolben aufweisender, insbesondere doppeltwirkender Hydraulikmotor ausgebildet sein, der von dem Arbeitsfahrzeug 10 mit Hydraulikdruck versorgt werden kann.

An dem Querträger 48 sind mehrere, in etwa gleichmäßig beabstandete Zinken 54 vorgesehen, welche sich in etwa senkrecht von dem Querträger 48 in Richtung des Aufnehmers 38 weg erstrecken und die in einem dem Querträger 48 abgewandten Endbereich 56 spitz auslaufen. Die jeweils am weitesten außen liegenden Zinken 54 werden im Folgenden als Zinken 54a bezeichnet. Auch die Tragarme 42 weisen jeweils eine entsprechend ausgebildet Zinke 54 auf, welche von dem Querträger 48 beabstandet ist und die im folgenden als Zinke 54b bezeichnet werden soll. Gemäß dem vorliegenden Ausführungsbeispiel sind die Zinken 54, 54a an dem Querträger 48 lösbar befestigt, insbesondere verschraubt, und etwa gleichmäßig beabstandet. Es sind auch andere Anordnungen denkbar, die nicht unter die beanspruchte Erfindung fallen. So können die Zinken 54, 54a, 54b beispielsweise ungleichmäßig beabstandet oder auch gruppiert angeordnet sein. Es ist auch denkbar, insgesamt nur eine Zinke 54, 54a, 54b und/oder an dem Querträger 48 nur eine oder auch mehrere Zinken 54, 54a vorzusehen.

Im Rahmen der Erfindung ist es möglich, dass nur eine oder auch mehrere Zinken an einem oder beiden Tragarmen vorgesehen sind.

Darüber hinaus ist an dem Querträger 48 eine Schneideinrichtung 58 vorgesehen, welche sich im Wesentlichen über eine Breite B des Querträgers 48 erstreckt. Die Schneideinrichtung 58 ist an dem Querträger 48 befestigt und weist eine Mehrzahl von zahnartigen Messern 60 auf. Die Messer 60 sind in der Art gleichschenkliger Dreiecke ausgebildet und weisen zwei als Schneidkanten 62 ausgebildete Schenkel 60 auf, welche sich in einer dem Querträger 48 abgewandten Spitze 62 treffen.

Die Schneideinrichtung 58 ist bezogen auf die übliche Fahrtrichtung des Arbeitsfahrzeugs 10 an dem Querträger 48 vor den Zinken 54 angeordnet, wobei die Zinken 54 die Spitzen 66 bzw. die Höhe H der Messer 60 vorzugsweise substantiell überragen. Alternativ ist es denkbar, dass die Zinken 54 mit den Messern 60 bzw. der Höhe H der Messer zumindest im Wesentlichen fluchtend angeordnet sind.

Zur Aufnahme eines Ballens (41, siehe Figur 1) durch das Arbeitsgerät 34 wird der Greifer 40 mittels des Schwenkmotors 52 in eine bezogen auf den Aufnehmer 38 nach oben verschwenkte Aufnahmestellung (siehe Figur 1, Darstellung in unterbrochenen Linien) gebracht, in der der Greifer 40 nicht mit dem Ballen 41 zusammenwirkt. Ist der Ballen 41 durch den Aufnehmer 38 aufgenommen, so wird der Greifer 40 derart nach unten bzw. in Richtung des Ballens 41 verschwenkt, dass die Zinken 54, 54a, 54b oder zumindest einige der Zinken 54, 54a, 54b an dem Ballen angreifen und vorzugsweise mit ihren spitz zulaufenden Endbereichen 56 in den Ballen 41 eingreifen. Die Schneideinrichtung 58 wirkt in dieser Stellung weder auf den Ballen 41 noch auf das den Ballen umhüllende Hüllmaterial 41a, wodurch der Ballen stabil seine Form behält und ein(e) einfache(r) Transport/Handhabung begünstigt wird.

Soll der Greifer 40 darüber hinaus ein den Ballen 41 umhüllendes Hüllmaterial 41a durchtrennen und/oder der Ballen 41 aufgebrochen werden, so verschwenkt der Schwenkmotor 52 den Greifer 40 derart, dass die Schneideinrichtung 58 an den Ballen 41 herangeführt wird und mit ihren Messern 60 in den Ballen 41 eingreift, so dass die Schneidkanten 62 das Hüllmaterial 41a durchtrennen.

## Patentansprüche

1. Arbeitsgerät zur Handhabung von Ballen (41) mit wenigstens einem Aufnehmer (38) und einem Greifer (40), wobei der Greifer (40) Zinken (54, 54a, 54b) und eine Schneideinrichtung (58) aufweist, und die Zinken (54) die Schneideinrichtung (41) zumindest bereichsweise überragen, wobei der Greifer (40) mit Bezug zu dem Aufnehmer (38) bewegbar vorgesehen ist, und der Greifer (40) zwei Tragarme (42) aufweist, welche rechts- und linksseitig über jeweils ein Gelenk (44) schwenkbar mit dem Aufnehmer (38) verbunden sind, wobei in einem dem jeweiligen Gelenk (44) abgewandten Bereich (46) die Tragarme (42) über einen Querträger (48) derart verbunden, dass sie mit diesem einen Schwenkrahmen (50) bilden, und an dem Querträger (48) mehrere der Zinken (54) gleichmäßig beabstandet vorgesehen sind, welche sich in etwa senkrecht von dem Querträger (48) in Richtung des Aufnehmers (38) weg erstrecken und die in einem dem Querträger (48) abgewandten Endbereich (56) spitz auslaufen **dadurch gekennzeichnet, dass** die Tragarme (42) jeweils eine entsprechend ausgebildet Zinke (54b) aufweisen, welche von dem Querträger (48) beabstandet sind.

2. Arbeitsgerät nach Anspruch 1, **dadurch gekennzeichnet, dass** sich die Schneideinrichtung (58) zumindest im Wesentlichen über die Breite (B) des Greifers (40) erstreckt.

3. Arbeitsgerät nach einem der vorherigen Ansprüche, **dadurch gekennzeichnet, dass** die Schneideinrichtung (58) wenigsten ein, insbesondere in einer Spitze (66) auslaufendes Messer (60) aufweist, wobei vorzugsweise durch Schenkel (64) des Messers (60) Schneidkanten (62) gebildet werden und/oder (die) Schenkel (64) des Messers (60) Schneidkanten (62) aufweisen und/oder wobei die Zinken (54) das Messer (60) bzw. insbesondere die Spitze (66) des Messers (60) substantiell überragt.

4. Arbeitsgerät nach einem der vorherigen Ansprüche, **dadurch gekennzeichnet, dass** wenigstens zwei Messer (60) vorgesehen sind.

5. Arbeitsgerät nach einem der vorherigen Ansprüche, **dadurch gekennzeichnet, dass** die Zinken (54, 54a, 54b) und das Messer/die Messer (60) vorzugsweise zumindest im Wesentlichen alternierend und/oder korrespondierend, insbesondere fluchtend vorgesehen sind.

6. Arbeitsgerät nach einem der vorherigen Ansprüche, **dadurch gekennzeichnet, dass** der Aufnehmer (38) in der Art einer Schaufel ausgebildet ist.

7. Arbeitsgerät nach einem der vorherigen Ansprüche, **dadurch gekennzeichnet, dass** der Greifer (40) mit Bezug auf den Aufnehmer (38) verschwenkbar vorgesehen ist und/oder Mittel zur selektiven Bewegung des Greifers (40) mit Bezug auf den Aufnehmer (38) vorgesehen sind.

8. Verfahren zur Handhabung eines insbesondere rundzylindrischen Ballens (41) mittels eines Arbeitsgerät (34) nach einem der Ansprüche 1 bis 7, **dadurch gekennzeichnet, dass** der Greifer (40) zur Handhabung des Ballens (41) eine erste Stellung, in der wenigstens eine der Zinken (54, 54a, 54b) in den Ballen (41) ein- bzw. an diesen angreift und wenigstens eine zweite Stellung einnehmen kann, in der die Schneideinrichtung (58) ein den Ballen (41) umhüllendes Hüllmaterial (41a) zumindest bereichsweise durchtrennt.

9. Verfahren nach Anspruch 8, **dadurch gekennzeichnet, dass** der Greifer (40) bezogen auf den Aufnehmer (38) zur Aufnahme eines Ballens (41) aus einer Ruhestellung in eine Aufnahmestellung gebracht, insbesondere verschwenkt werden kann, in der die Zinke (54, 54a, 54b) an bzw. in dem/den Ballen (41) (ein)greift, und weiter in eine Schneidstellung gebracht werden kann, in der die Schneideinrichtung (58) das Hüllmaterial (41a) durchtrennt, wobei der Greifer (40) hierfür vorzugsweise über die Aufnahmestellung hinaus bewegt bzw. verschwenkt werden kann.

## Claims

1. Implement for handling bales (41), having at least one receiver (38) and a gripper (40), wherein the gripper (40) has prongs (54, 54a, 54b) and a cutting installation (58), and the prongs (54) at least in regions protrude beyond the cutting installation (41), wherein the gripper (40) is provided so as to be movable in relation to the receiver (38), and the gripper (40) has two support arms (42) which on the right side and the left side are in each case pivotably connected to the receiver (48) by way of an articulation (44), wherein, in a region (46) facing away from the respective articulation (44), the support arms (42) are connected by way of a crossbeam (48) in such a manner that said support arms (42) conjointly with the crossbeam (48) form a pivoting frame (50), and a plurality of the prongs (54), which from the crossbeam (48) extend approximately perpendicularly in the direction of the receiver (38) and taper so as to form a point in an end region (56) facing away from the crossbeam (48), are provided so as to be uniformly spaced apart on the crossbeam (48), **characterized in that** the support arms (42) have in each case one correspondingly configured prong (54b), the latter being spaced apart from the crossbeam (48).

2. Implement according to Claim 1, **characterized in that** the cutting installation (58) extends at least substantially across the width (B) of the gripper (40) .

3. Implement according to one of the preceding claims, **characterized in that** the cutting installation (58) has at least one cutter (60) which in particular tapers so as to form a tip (66), wherein cutting edges (62) are preferably formed by blades (64) of the cutter (60), and/or (the) blades (64) of the cutter (60) have cutting edges (62), and/or wherein the prongs (54) substantially protrude beyond the cutter (60), or in particular beyond the tip (66) of the cutter (60).

4. Implement according to one of the preceding claims, **characterized in that** at least two cutters (60) are provided.

5. Implement according to one of the preceding claims, **characterized in that** the prongs (54, 54a, 54b) and the cutter/cutters (60) are provided in an at least substantially alternating and/or corresponding manner, in particular so as to be flush with one another.

6. Implement according to one of the preceding claims, **characterized in that** the receiver (38) is configured in the manner of a shovel.

7. Implement according to one of the preceding claims, **characterized in that** the gripper (40) is provided so as to be pivotable in relation to the receiver (38), and/or means for selectively moving the gripper (40) in relation to the receiver (38) are provided.

8. Method for handling an in particular circular-cylindrical bale (41) by means of an implement (34) according to one of Claims 1 to 7, **characterized in that** the gripper (40) for handling the bale (41) can assume a first position in which at least one of the prongs (54, 54a, 54b) engages in or on the bale (41), and can assume at least one second position in which the cutting installations (58) at least in regions cuts through casing material (41a) that encases the bale (41).

9. Method according to Claim 8, **characterized in that** the gripper (40) for receiving a bale (41) can be moved, in particular pivoted, in relation to the receiver (38), from a resting position to a receiving position in which the prong (54, 54a, 54b) engages on or in the bale (41), and further moved to a cutting position in which the cutting installation (58) cuts through the casing material (41a), wherein the gripper (40) to this end can preferably be moved or pivoted beyond the receiving position.

## Revendications

1. Appareil de travail destiné à la manutention de balles (41) et comprenant au moins un ramasseur (38) et un moyen de préhension (40), le moyen de préhension (40) comportant des griffes (54, 54a, 54b) et un dispositif de coupe (58), et les griffes (54) faisant saillie au moins par endroits du dispositif de coupe (41), le moyen de préhension (40) étant prévu pour être mobile par rapport au ramasseur (38), et le moyen de préhension (40) comportant deux bras de support (42) qui peuvent être reliés au ramasseur (38) de manière à pouvoir pivoter vers la droite et vers la gauche par le biais d'une articulation (44), les bras de support (42) étant reliés par le biais d'une traverse (48) dans une région (46) opposée à l'articulation respective (44) de façon à former avec ladite traverse un cadre pivotant (50) et plusieurs des griffes (54) étant prévues sur la traverse (48) en étant régulièrement espacées les unes des autres et s'étendant à peu près perpendiculairement depuis la traverse (48) en direction du ramasseur (38) et se terminant en pointe dans une région d'extrémité (56) opposée à la traverse (48), **caractérisé en ce que** les bras de support (42) comportent chacun une griffe (54b) qui est conçue de manière correspondante, lesquelles griffes sont espacées de la traverse (48).

2. Appareil de travail selon la revendication 1, **caractérisé en ce que** le dispositif de coupe (58) s'étend au moins sensiblement sur la largeur (B) du moyen de préhension (40).

3. Appareil de travail selon l'une des revendications précédentes, **caractérisé en ce que** le dispositif de coupe (58) comporte au moins un couteau (60), notamment se terminant par la pointe (66), les bords de coupe (62) étant de préférence formés par des branches (64) du couteau (60) et/ou des (les) branches (64) du couteau (60) comportant des bords de coupe (62) et/ou les griffes (54) faisant sensiblement saillie du couteau (60) ou en particulier de la pointe (66) du couteau (60).

4. Appareil de travail selon l'une des revendications précédentes, **caractérisé en ce qu'**au moins deux couteaux (60) sont prévus.

5. Appareil de travail selon l'une des revendications précédentes, **caractérisé en ce que** les griffes (54, 54a, 54b) et le couteau/les couteaux (60) sont de préférence prévus au moins de manière sensiblement alternée et/ou correspondante, en particulier en alignement.

6. Appareil de travail selon l'une des revendications précédentes, **caractérisé en ce que** le ramasseur (38) est conçu à la manière d'une pelle.

7. Appareil de travail selon l'une des revendications précédentes, **caractérisé en ce que** le moyen de préhension (40) est prévu de manière à pouvoir pivoter par rapport au ramasseur (38) et/ou des moyens sont prévus pour déplacer sélectivement le moyen de préhension (40) par rapport au ramasseur (38).

8. Procédé de manutention d'une balle (41) notamment en forme de cylindre à base ronde, à l'aide d'un appareil de travail (34) selon l'une des revendications 1 à 7, **caractérisé en ce que**, pour la manutention de la balle (41), le moyen de préhension (40) présente une première position, dans laquelle au moins une des griffes (54, 54a, 54b) s'engage dans ou sur la balle (41), et peut prendre au moins une deuxième position dans laquelle le dispositif de coupe (58) sectionne au moins par endroits un matériau d'enveloppe (41a) enveloppant la balle (41).

9. Procédé selon la revendication 8, **caractérisé en ce que** le moyen de préhension (40), basé sur le ramasseur (38) pour ramasser une balle (41), peut être amené, en particulier pivoté, d'une position de repos à une position de ramassage dans laquelle la griffe (54, 54a, 54b) s'engage sur ou dans la balle (41) (saisit celle-ci) puis peut être amené dans une position de coupe dans laquelle le dispositif de coupe (58) sectionne le matériau d'enveloppe (41a), le moyen de préhension (40) pouvant pour cela de préférence être déplacé ou pivoté au-delà de la position de ramassage.
